# EUROPEAN PATENT APPLICATION

(11) **EP 0 930 095 A1**
(43) Date of publication of application: **21.07.1999**
(21) Application number: 98870008.4
(22) Date of filing: 16.01.1998
(51) Int. Cl.: B01J 7/02, B65D 83/14

(54) **Gas generating device with flooding chamber**

(71) Applicant: THE PROCTER & GAMBLE COMPANY, Cincinnati, Ohio 45202 (US)
(72) Inventor: Vos, Eddy, (NMN), 3210 Linden (BE)
(74) Representative: Mather, Peter Geoffrey

(57) **Abstract**

The present invention relates to a device (1,2) for producing a gas (10,20), the device (1,2) comprising a first (11,21) and a second (12,22) compartment, the first compartment (11,21) containing a first reagent (13,23) and the second compartment (12,22) containing a second reagent (14,24), the first reagent (13,23) being a flowing material, the first (13,23) and the second (14,24) reagent producing the gas (10,20) when reacting with each other, characterised in that the device (1,2) further comprises a chamber (16,26), the chamber (16,26) being mobile between a first and a second position, whereby the mobile chamber (16,26) communicates with the first compartment (11,21) in the first position and with the second compartment (12,22) in the second position. Said device provides the necessary propellant when used in a pressurized container. In one working manner the container has to be tilted to activate the gas generating device.

## Description

### Technical field

The invention relates to gas generating devices of the type used in pressurised containers.

### Background of the invention

Gas generating devices are widely used for producing gas, particularly in different types of pressurised containers. Gas is usually generated in such devices by means of a reaction between two products, a first and a second reagent. In order to control such a reaction, it is preferred to have the first reagent in a first compartment, and the second reagent in a second compartment, so that the reaction could occur only when desired by bringing the reagents together. In order to further control the quantity of gas produced by the reaction, it is preferred to have at least one of the two reagent in the form of a flowing material, so that the reagent in the flowing form could be handled more easily. Furthermore, if at least one reagent is in a flowing form, the reaction will be favoured as the surface of reaction between the reagents will be greater. Once the gas is produced, it is expelled from the device using means for egress of the gas.

The present invention concerns a device for producing a gas, the device comprising a first and a second compartment, the first compartment containing a first reagent and the second compartment containing a second reagent, the first reagent being a flowing material, the first and the second reagent producing the gas when reacting with each other, the device comprising means for egress of the gas. Such a device is known from EP-A-0 312 078.

Among the advantages of such devices is the fact that they allow control of gas production depending on a pressure gradient, the devices comprising a compartment having a reference pressure as well as an actuator such as a valve preventing undesired actuation. This differs from other devices such as the device disclosed in FR-A-2 690 142, published on the 22^{nd} of October 1993, whereby the gas is contained at high pressure in the device, the gas being released when required. Indeed, devices such as disclosed in FR-A-2 690 142 require to have a substantially high pressure in the device, whereas devices such as in EP-A-0 312 078 do not require such high pressures as the gas is produced only when needed. There are other devices, particularly in the medical field, which are based on the same principle of using two reagents and two compartments, such as the device disclosed in WO 95/23641. However, the device from WO 95/23641 can be actuated only once, by breaking a membrane separating the two reagents to start the reaction. This differs from the device disclosed in EP-A-0 312 078, whereby the reaction can be repeatedly started or stopped depending on the gas pressure prevailing around the device. Other devices equipped with pressure sensitive actuators are disclosed in US-A-3 178 075 or in the pending European application of the applicant number 96870149.0, filed on the 25^{th} of November 1996.

While having these and other advantages, two-compartments gas generating devices, and particularly such pressure sensitive devices, have disadvantages. Indeed, such pressure sensitive devices should be relatively sensitive to be sufficiently efficient. Furthermore, such devices need to comprise a valve avoiding undesired actuation due to the orientation of the device.

The invention seeks to provide a device of the above mentioned can which is not pressure sensitive.

### Summary of the invention

In accordance with the invention, this object is accomplished in a device of the above kind, in that the device further comprises a chamber, the chamber being mobile between a first and a second position, whereby the mobile chamber communicates with the first compartment in the first position and with the second compartment in the second position.

A device formed in accordance with the invention has a number of advantages. Indeed the production of gas is triggered by motion of the chamber from the first to the second position, whereby a portion of the first reagent normally enters the chamber when the chamber is in the first position, this portion of the first reagent being normally released in the second compartment and therefore put in contact with the second reagent when the chamber is in the second position. Therefore, such a device is not pressure sensitive and does not require use of a valve when used for regenerating pressure in an aerosol container. Indeed, the action of the user on the valve of the aerosol could advantageously be used for moving the chamber. Furthermore, use of a chamber for producing the gas allows to have an accurate control on the quantity of gas produced by the device. Indeed, motion of the chamber is necessary to initiate or trigger gas production, and once production of gas is initiated, the quantity produced is at least limited by the quantity of first reagent which can be inserted within the chamber and thus transferred from the first to the second compartment for reacting.

### Detailed description of the invention

The invention will now be described by way of example and with reference to the accompanying drawings in which:
Figure 1 is a cross-sectional view of an embodiment of a device according to the invention, whereby the chamber is in the first position.
Figure 2 is a cross-sectional view of the embodiment of Figure 1, whereby the chamber is in the second position.
Figure 3 is a cross-sectional view of the embodiment of Figure 1 during gas production.
Figure 4 is a cross-sectional view of another embodiment of a device according to the invention, whereby the chamber is in the second position.
Figure 5 is a cross-sectional view of the embodiment of Figure 4, whereby the device is tilted and the chamber is in the first position.
Figure 6 is a cross-sectional view of the embodiment of Figure 4, whereby the chamber is in the second position.
Figure 7 is a cross-sectional view of the embodiment of Figure 4 during gas production.

The device according to the invention is for producing a gas. Production of gas is particularly useful for the pressurised containers industry. Indeed it is well known in the aerosol industry that there is a need to move out HFC propellants on account of their environmental profile. The replacement choice has mostly been the low molecular weight hydrocarbons such as propane, butane, pentane, hexane, etc., but these are flammable gases which may not always be suitable for use inside confined appliances with potential ignition sources. For these reasons, the industry is seeking a move to more environmentally friendly chemicals.

Replacing the organic propellants, such as those listed above, by non-liquefiable propellant gases presents new problems. Unlike more conventional liquefiable organic propellant gases, gases such as carbon dioxide and nitrous oxide cannot be liquefied at the pressures obtainable in an aerosol container (i.e. typically 10 to 12 bar maximum). As the product composition is progressively emptied out of the aerosol canister the carbon dioxide or nitrous oxide in the head-space cannot be replenished as would be the case with liquefiable propellants, and consequently the pressure in the head-space drops. If the head-space pressure drops too low it will no longer be possible to dispense a product from the aerosol container. Therefore, the device of the invention is preferably producing CO₂ or N₂O.

The device comprises two compartments, each containing a reagent. The reagents are such that they are producing the gas when reacting with each other. A characteristic of the invention is that the first reagent is a flowing material. A consequence of using a flowing material for one of the reagents is that the surface of contact between the reagents is improved. Indeed, a reaction would be less favoured in case of use of solid blocks of reagents, whereby the surface of contact for the reaction would be reduced. However, it should be noted that materials such as powders are hereby included in flowing materials. Indeed, The term "flowing materials" encompasses materials which are flowing under gravity or may be pumped. Such materials include liquids, pastes, gels, emulsions or powders. In a preferred embodiment of the invention, the second reagent is a solid material. The reaction between the reagents is of chemical and/or physical origin. For example, the first and second reagents may simply directly chemically react with each other to produce the gas, as would be the case when the first reagent is an acid and the second a carbonate or bicarbonate, thus producing CO₂. But the chemical reaction could be indirectly caused and due to physical reasons, as would be the case if the second reagent contains a mixture of two secondary reagents in solid form, such as an acid and a carbonate or bicarbonate, whereby the first reagent is a solvent for the second reagent such as water for example. Indeed in such a case the actual chemical reaction would occur between the secondary reagents and not directly between the first and second reagents.

Reagents or secondary reagents include alkali such as carbonate or bicarbonate. The carbonate may be used in any salt form, but sodium, calcium and magnesium salts are preferred. Also included are acids which would react with alkalis, preferably selected from the group consisting of citric acid, malic acid, malonic acid, fumaric acid, glycolic acid, tartaric acid, aspartic acid, succinic acid, glutaric acid, adipic acid, aconic acid, ascorbic acid, hydrochloric acid, sulphuric acid or mixtures thereof. Particularly preferred are the organic acids, and most particularly preferred is maleic acid.

The first reagent may be used in solid form, for example as a solid block or as a tablet. The carbonate and acid may be placed in the second compartment as discrete, preferably premixed, powders when used as secondary reagents for the second reagent. Alternatively either or both of the carbonate and acid may be in the form of separate tablets, or in the form of a mixed carbonate/acid tablet.

The device according to the invention comprises means for egress of the gas. Typically, such means are a valve which can let gas out when gas is produced.

Other means include porous walls or wall sections for the device, whereby the gas will flow out of the device through such porous walls or section of walls when produced. It should be noted that such means for egress of the gas could also simply be a hole provided in a wall of the device, preferably in a wall separating the second compartment from the outside of the device. Most preferred here are means allowing egress of gas while preventing ingress of material, as can be achieved when using a resilient valve for example.

The device according to the invention further comprises a chamber. The chamber is a part comprising an internal volume. The chamber is mobile between a first and a second position, whereby the mobile chamber communicates with the first compartment in the first position and with the second compartment in the second position. During use, the chamber allows indirect communication between the first and the second compartment. Indeed, the first and second compartments preferably do not have direct communication means between them, so that the first and second reagent could react only in a controlled manner. This control of the reaction is achieved by using the chamber as a flooding chamber, whereby it can be completely or partially filled with the first reagent when it is in the first position, and then moved to the second position, whereby the first reagent can flow into the second compartment containing the second reagent, thus allowing occurrence of the reaction. When it is in the first position, the chamber communicates with the first compartment. Such communication is typically obtained by an opening in a wall of the chamber whereby the internal volume of the chamber opens onto the first compartment when the chamber is in its first position. As the first reagent is a flowing material, the first reagent can flow from the first compartment into the chamber when the chamber is in the first position, the flow going through the communication between the first compartment and the chamber. It should be noted that such a flow between the first compartment and the chamber may depend on elements other than the position of the chamber. Indeed, the first reagent may not completely fill the first compartment, in which case the chamber may not be in contact with the first reagent even if it communicates with the first compartment. Indeed the chamber may then communicate with a part of the first compartment which is empty from the first reagent. In such a case, it may be that the device has to be tilted in a pre-determined orientation for the flow of the first reagent to enter the chamber. This would allow further improved control on the occurrence of the reaction, whereby the first reagent will enter the chamber only if the chamber is in the first position and if the device has a pre-determined orientation.

The chamber can also be moved into a second position, whereby it is in communication with the second compartment. Communication between the chamber and the second compartment may occur in the same manner than communication between the chamber and the first communication, and could for example be provided by means of an opening in a wall of the chamber whereby the opening opens onto the first compartment when the chamber is in the first position and onto the second compartment when the chamber is in the second position. The chamber should have first and second positions such that when it communicates with the first compartment it does not communicate with the second compartment and vice versa, so that direct communication between the first and second compartment could be avoided. Indeed, in case of a direct communication between the first and second compartment, there would be a possibility that for example all of the first reagent could flow down into the second compartment in an undesired manner, thus involving production of gas in excess. Furthermore, it is preferred that the first reagent is not a flowing material, so that it cannot flow into the chamber and be deposited in the first compartment. Indeed, it is preferred that the second reagent is in the solid form. It could also be preferred to prevent ingress of the second reagent in the chamber by sizing the communication between the chamber and the second compartment appropriately, so that first reagent could flow out of the chamber into the second compartment without allowing passage of the second reagent from the second compartment to the chamber.

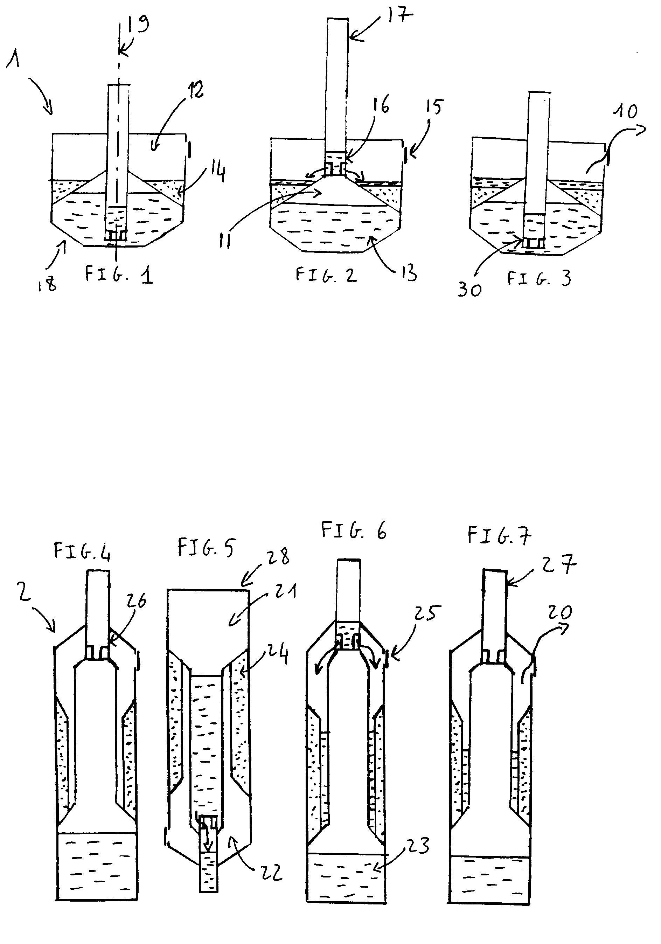

In a preferred embodiment of a device 1 according to the invention presented on Figure 1, the device 1 is illustrated in the first position. In this embodiment, the chamber 16 has a cylindrical shape with a longitudinal axis 19, the chamber 16 being mobile along the longitudinal axis 19, the communication with the first compartment 11 in the first position and with the second compartment 12 in the second position being made through one or more openings 30 located at an extremity of the chamber 16. It should be noted that a single opening 30 would be sufficient for serving as communication means. As shown on Figure 1 whereby the chamber 16 is in the first position, the first reagent 13 enters the chamber 16. The geometry of the chamber 16 and of the first compartment 11 as well as the positioning of the openings 30 are such that the first reagent 13 enters the chamber 16 or does not enter the chamber 16 depending on the orientation 18 of the device 1. In another embodiment according to the invention, the first reagent 13 enters the chamber 16 when the chamber 16 is in the first position independently on the orientation of the chamber 16. This is obtained for example by using a chamber 16 having a porous wall acting as communication means, whereby the geometry of the device 1 is such that at least one part of the wall of the chamber 16 is in contact with the first reagent 13 when the chamber 16 is in first position. The chamber 16 of the device 1 of Figure 1 can be moved to the second position as illustrated on Figure 2. In this case, as some of the first reagent 13 had entered the chamber 16 as illustrated on Figure 1, and as the chamber 16 communicates with the second compartment 12 when in the second position, the first reagent 13 can flow through the communication means, i. e. the openings 30 on Figure 2, to come into contact with the second reagent 14 present in the second compartment 12. It should be noted that flowing of the first reagent 13 out of the chamber 16 in the second compartment 12 when the chamber 16 is in the second position could also depend on the orientation 18 of the device, depending on the geometry of the device 1. As the first reagent 13 is transported into the second compartment 12 through the chamber 16, the quantity of first reagent 13 transported cannot exceed the volume inside the chamber 16. This is important for safety reasons, whereby the amount of gas 10 produced can be given a maximum value depending on the reagents concentrations and on the maximum internal volume of the chamber 16. This indeed avoids production of gas 10 in excess which could lead to an excessive pressure rise, thus involving safety issues for a user. Indeed, the device 1 of the invention aims at improving safety of users. Furthermore, as such a device 1 allows gas 10 production in a controlled manner, only the quantity of gas 10 desired can be produced, thus allowing to use reagents (13, 14) or gas 10 in controlled amounts, thus having beneficial environmental consequences. As shown on Figure 3, gas 10 starts being produced once the reagents (13, 14) have been in contact. Gas 10 production may be delayed for example due to the time needed to start dissolution if the first reagent 13 is for example a solvent for the second reagent 14, the second reagent 14 containing a mixture of two secondary reagents in the solid form. In particular, the second reagent 14 could contain a first secondary reagent as an acid and a second secondary reagent as a carbonate, the first reagent 13 being water. Once gas 10 starts being produced, it can exit from the device 1 using the means 15 for egress of the gas 10 as illustrated on Figure 3. In the embodiment presented, gas 10 is produced independently from the position of the chamber 18 once the first 13 and second 14 reagents are in contact. In a preferred embodiment, a device 1 as illustrated on Figure 1 is fixed under the valve of an aerosol container, the valve comprising a stem 17, so that the mobile chamber 16 is fixed or is part of the stem 17, in such a manner that displacement of the stem 17 by a user for example to expel content from the container will induce a displacement of the chamber 16 between first and second position or between second and first position, thus allowing production of gas 10. For example, if the valve is on the upper side of the aerosol container when the container is used, pressing the stem 17 would bring the chamber 16 in first position as on Figure 1, while release of pressure would bring the chamber 16 in second position as on Figure 2, thus allowing replenishment of the gas 10 expelled during use of the container.

A different geometry for a device 2 according to the invention is illustrated on Figure 4. This geometry is more specifically designed for fixing the chamber 26 to a stem 27, the stem 27 being part of a valve for a pressurised container, whereby displacement of the stem 27 for actuating the valve of the pressurised container produces a displacement of the chamber 26 between the first and the second position. It is also possible for the chamber 26 to be an extension of the stem 27 itself. The embodiment illustrated on Figure 4 is such that the device 2 needs to be tilted as on Figure 5 to allow entering of the first reagent 23 when the chamber 26 is in the first position. Indeed, the device 2 is such that the first compartment 21 is only partially filled with the first reagent 23, whereby the first reagent 23 enters the chamber 26 when the chamber 26 is in the first position and when the device 2 has a pre-determined orientation as illustrated on Figure 5. This particularly applies when using a pressurised container containing a device 2 as for example illustrated on Figure 4, whereby such the chamber 26 is fixed to a stem 27, the stem 27 being part of a valve for the pressurised container, whereby displacement of the stem 27 for actuating the valve of the pressurised container produces a displacement of the chamber 26 between the first and the second position, and whereby the chamber 26 is in the first position when the valve is opened and in the second position when the valve is closed, the pressurised container containing a product and a non liquefiable gaseous propellant, whereby the gas 20 produced by the device 2 is the propellant, the gaseous propellant being above the product in the upper part of the container when the container is upright, the valve allowing communication between the upper part of the container and the outside of the container when it is opened, so that the container is normally used when tilted, whereby the pre-determined direction 28 is such that the first reagent 23 enters the chamber 26 only when the container, and consequently the device 2, is tilted, and when the chamber 26 is in the first position when the valve is opened. In a preferred embodiment, the device 2 is used in a pressurised container containing a foaming detergent composition, the propellant being CO₂, whereby the valve communicates with the upper part of the inside of the container when the container is upright, i.e. when the end of the container comprising the valve is upwards. In such a situation, the non liquefiable propellant gaseous phase, for example CO₂, is situated above the product, for example the foaming composition. Therefore, as the valve opens on the upper part of the container, the container should be used upside down so that the product should be pushed through the valve by the propellant. Therefore, normal use of such a container is as follows: turn the container the valve facing downwards down, press onto the stem 27 of the valve to open it, product is dispensed, remove pressure on the stem 27, the valve closes back, turn the container back upwards. When a device 2 as illustrated in Figure 4 is placed under the stem 27, the following occurs: when the container is upright with the valve facing upright, the device 2 is as on Figure 4, the chamber 26 being in the second position. Indeed, the chamber 26 has in this example the second position as the default position of the chamber 26, whereby it is held in the default position by spring means which can retain the stem 27, thus maintaining the valve closed by default. When the container is tilted for use, the device 2 is also tilted as illustrated on Figure 5. Furthermore, the user presses onto the stem 27 to open the valve, so that the chamber 26 goes to the first position, thus letting the first reagent 23 enter the chamber 26. Once the user stops pressing onto the stem 27 to stop dispensing and turns the container, and thus the device, back upright, the device 2 is as illustrated on Figure 6, whereby the chamber 26 is in the second position. Gas 20 production can therefore occur, as illustrated on Figure 7. It should be noted that an advantage of such a device 2 used in such a case is that the quantity of gas 20 produced is proportional to the quantity of the first reagent 23 entering the chamber 26, this quantity depending on the length of time during which the product is dispensed. Therefore, the more product is dispensed, the more propellant is lost by dispensing, the more propellant is regenerated by the device 2, while still having a maximum limit corresponding to the maximum volume of the chamber 26 which is beneficial for the safety of the user. In a preferred embodiment, the valve of the pressurised container is a blocking valve, so that the valve can be opened only in a pre-determined orientation, so that the propellant is not undesirably wasted. Such a container with a blocking valve would therefore not only avoid waste of propellant by means of a blocking valve but would also allow for regeneration of used propellant by means of the device 2 of the invention, thus allowing consumer satisfaction while maintaining or improving consumer safety. Indeed, in existing cans, even when equipped with blocking valves, pressure inside the can falls during use due to normal use, thus involving a change of quality of the product dispensed, as would be the case for example if dispensing a foaming composition, whereby density of the foam would increase after a number of uses due to pressure losses, whereas such losses could be compensated using a device 2 according to the invention.

The reaction between the first (13, 23) and the second (14, 24) reagent for producing the gas (10, 20) can be influenced by the surface of contact between the first (13, 23) and second (14, 24) reagents. For example, the device 2 of Figure 4 has a surface of contact between first (13, 23) and second (14, 24) reagents which is relatively larger than the one on the device 1 of Figure 1. Such a difference in surface of contact will normally influence the speed of the reaction. Other ways to modify the surface of contact would be for example to use porous materials or powders.

## Claims

1. A device (1, 2) for producing a gas (10, 20), the device (1, 2) comprising a first (11, 21) and a second (12, 22) compartment, the first compartment (11, 21) containing a first reagent (13, 23) and the second compartment (12, 22) containing a second reagent (14, 24), the first reagent (13, 23) being a flowing material, the first (13, 23) and the second (14, 24) reagent producing the gas (10, 20) when reacting with each other, the device (1, 2) comprising means (15, 25) for egress of the gas (10, 20), characterised in that the device (1, 2) further comprises a chamber (16, 26), the chamber (16, 26) being mobile between a first and a second position, whereby the mobile chamber (16, 26) communicates with the first compartment (11, 21) in the first position and with the second compartment (12, 22) in the second position.

2. The device (1, 2) according to claim 1, whereby the second reagent (14, 24) is a solid material.

3. The device (1, 2) according to claim 2, whereby the second reagent (14, 24) contains a mixture of two secondary reagents in solid form, the first reagent (13, 23) being a solvent for the second reagent (14, 24).

4. The device (1, 2) according to claim 1, whereby the chamber (16, 26) is fixed to a stem (17, 27), the stem being part of a valve for a pressurised container, whereby displacement of the stem (17, 27) for actuating the valve of the pressurised container produces a displacement of the chamber (16, 26) between the first and the second position.

5. The device (1, 2) according to claim 4, whereby the chamber (16, 26) is in the first position when the valve is opened and in the second position when the valve is closed.

6. The device (2) according to claim 1, whereby the first compartment (21) is only partially filled with the first reagent (23), whereby the first reagent (23) enters the chamber (26) when the chamber (26) is in the first position only when the device (2) has a predetermined orientation (18, 28).

7. The device (1, 2) according to claim 1, whereby the gas (10, 20) is CO₂, the first reagent (13, 23) being an acid and the second reagent (14, 24) being a carbonate or a bicarbonate.

8. The device (1) according to claim 1, whereby the chamber (16) has a cylindrical shape with a longitudinal axis (19), the chamber (16) being mobile along the longitudinal axis (19), the communication with the first compartment in the first position and with the second compartment in the second position being made through an opening (30) located at an extremity of the chamber.

9. The device (1, 2) according to claim 1, whereby the second position is the default position of the chamber (16, 26), and whereby it is held in the default position by spring means.

10. A pressurised container containing a device (1, 2) as in claims 5 and 6, the pressurised container containing a product and a non liquefiable gaseous propellant, whereby the gas (10, 20) produced by the device (1, 2) is the propellant, the gaseous propellant being above the product in the upper part of the container when the container is upright, the valve allowing communication between the upper part of the container and the outside of the container when it is opened, so that the container is normally used when tilted, whereby the pre-determined direction is such that the first reagent (13, 23) enters the chamber (16, 26) only when the container is tilted and when the chamber (16, 26) is in the first position when the valve is opened.
